# EUROPEAN PATENT SPECIFICATION

(11) **EP 2 120 641 B1**
(45) Date of publication and mention of the grant of the patent: **14.07.2010**
(21) Application number: 07869618.4
(22) Date of filing: 20.12.2007
(51) Int. Cl.: A47B 46/00, B64D 11/04

(54) **GALLEY UNIT INCLUDING CONTAINER HANDLING MECHANISM AND HANDLING METHOD.**
BORDKÜCHENEINHEIT MIT BEHÄLTERHANDHABUNGSMECHANISMUS SOWIE HANDHABUNGSVERFAHREN
CUISINE DE BORD D'AÉRONEF COMPRENANT UN MÉCANISME DE MANIPULATION DE RÉCIPIENTS ET PROCÉDÉ DE MANIPULATION

(30) Priority: 20.12.2006 US 871037 P; 19.12.2007 US 959852
(43) Date of publication of application: 25.11.2009
(73) Proprietor: BE AEROSPACE, INC., Wellington, FL 33414 (US)
(72) Inventor: ARNOLD, Geraldine, Winston-Salem, NC 27103 (US); JOHNSON, Glenn, A., King, NC 27021 (US); CUNNINGHAM, Craig, Old Northants NN6 9EN (GB); PEURIFOY, Mark, Wayne, Winston-Salem, NC 27104 (US)
(74) Representative: Sherrard-Smith, Hugh
(86) International application number: PCT/US2007/088303
(87) International publication number: WO 2008/079939

(56) References cited:
- WO-A-2004/009444
- US-A- 2 854 307
- US-B1- 6 412 603

## Description

### CROSS-REFERENCE TO RELATED APPLICATIONS

This application claims priority to U.S. Provisional Patent Application No. 60/871,037 filed December 20, 2006 and entitled "Container Handling Mechanism for Galley."

### BACKGROUND OF THE INVENTION

### 1. Technical Field

The present invention relates generally to vehicle galley units, and more particularly, to a container handling mechanism for a galley unit that aids in stowing and retrieving elevated galley containers and other items in a controlled manner, and multi-function container handling mechanisms.

A galley for an aircraft is known from WO 2004/009444, which constitutes the closest prior art.

### 2. Background of the Invention

Manufacturers of vehicle interior fittings are constantly trying to maximize the limited space available for storing items in passenger services areas, such as lavatories and galleys. These areas typically include a number of storage compartments for storing items in a safe and readily accessible manner, and often include compartments arranged from floor to ceiling within a galley unit. Heavy containers, such as food and beverage service carts are typically stored at floor level and include attached wheels to facilitate transport throughout the cabin. Other containers may be stored at a level above the floor, often times overhead, and are typically stored and retrieved by hand. Like beverage carts, overhead stored items can also be heavy and bulky to handle, making their storing and retrieval difficult. Further, while items may not be particularly heavy, items that are repeatedly accessed from overhead may lead to fatigue and accidents. Items that are typically stored above the floor level in a galley unit include food, beverages, dishes and appliances such as ice makers, coffee makers and microwaves, among other items. These items often weigh in excess of 4,5 kg (10 lbs) and are often stored several feet or more above the floor.

While the repetitive manual handling of heavy, elevated items by flight attendants and loaders is just one problem in conventional galleys, other problems exist. For example, preparing food and beverages for passengers requires a sufficient amount of workspace to comfortably and safely prepare those items. Typically, food and beverage preparation is performed within an appliance's compartment or away from a galley unit, making preparation difficult.

Accordingly, it would be desirable to provide a container and other item handling mechanism for a galley unit that aids a flight attendant or loader in storing and retrieving elevated items within/from a galley unit. Further, it would be desirable to provide a container handling mechanism that not only assists in raising and lowering items, but performs other functions as well, such as providing a workspace at a galley unit and as a structure for maintaining containers and other items within their compartments during flight.

### SUMMARY OF THE INVENTION

To achieve the foregoing and other objects and advantages, and in accordance with the purposes of the invention as embodied and broadly described herein, the present invention provides a galley unit with a load-assisting, multi-function container handling mechanism for storing and retrieving elevated storage containers of a vehicle galley unit as defined by the features of claim 1 and a method for storing a galley container as defined by the features of claim 11.

In one aspect, the present invention provides a support deck capable of being controllably raised and lowered to store and retrieve containers and other items at a level elevated from the floor of a vehicle, such as an elevated storage compartment of an aircraft galley unit. The deck is preferably supported by a pair of lift arms that each include upper and lower members that are connected together through a lift cylinder. The support deck also preferably functions as a work deck when placed into one of its several configurations. The multi-function container handling mechanism and work deck is preferably selectively and controllably movable between a fully raised and a fully lowered position and any position therebetween. Each lift arm is preferably secured at a first end to a galley unit or other rigid structure, and secured at a second end to the deck. The deck preferably includes more than one member hinged together to permit folding. The deck is foldable to provide a work deck, support shelf, compartment door and foldable to be stowed when not in use. All or a portion of the deck may be stowed within a slot defined by its respective galley unit when not in use. The deck is preferably sturdy, lightweight and made from durable material such as aluminum or polyethylene.

In another aspect, the present invention provides a container handling mechanism including a deck and attached supporting arms capable of being moved between multiple configurations to provide multiple functions. In a first configuration, the deck portion of the container handling mechanism is folded so that a first portion of the deck is stowed within a slot defined by the galley unit and a second portion of the deck is maintained against a front of the galley unit in a manner similar to a compartment door. In the first configuration, the supporting arms are folded to a compact position. In a second configuration, a first portion of the deck is moved to a horizontal position to function as a work deck or support shelf. The supporting arms are maintained in a compact position. In a third configuration, the deck is lowered to provide a work deck and lowered shelf for placing items to be raised to an elevated position with assistance. The supporting arms of the container handling mechanism preferable include lift cylinders such as spring- or pressure-biased gas, hydraulic, or pneumatic cylinders.

In another aspect, the present invention provides a vehicle galley unit including an integrated, multi-function container handling mechanism for assisting in loading/retrieving containers and other items, referred to herein generically as "containers," to/from the galley unit. In one method of use, containers may be palced onto a deck of the handling mechanism, raised with assistance to a desired level, and slid into a predetermined compartment. Containers may also be moved from their compartment onto the deck and lowered with assistance to a comfortable handling level, such as waist level. The container handling mechanism, and particularly the deck portion of the mechanism, also functions as a generally horizontal work deck when moved to a lowered position that may be used to prepare food and beverages or perform other tasks. The handling mechanism may also function as a galley compartment covering door when not being used to raise/lower containers.

Additional features and advantages of the invention will be set forth in the detailed description which follows, and in part will be readily apparent to those skilled in the art from that description or recognized by practicing the invention as described herein, including the detailed description which follows, the claims, as well as the appended drawings. Although the container handling mechanism is described with reference to an aircraft galley unit for illustration purposes, it should be understood that the container handling mechanism may be a component of any vehicle galley unit, and the principals as described herein may be applied to environments other than galleys as well.

### BRIEF DESCRIPTION OF THE DRAWINGS

These and other features, aspects and advantages of the present invention are better understood when the following detailed description of the invention is read with reference to the accompanying drawings, in which:

Figure 1 is a front view of a galley unit constructed according to an embodiment of the present invention;

Figure 2 is a side view of the galley unit of FIG. 1 illustrating the container handling mechanism in various configurations;

Figure 3 is a perspective view of a galley unit including an attached container handling mechanism shown in a stored configuration; and

Figure 4 is a perspective view of the galley unit of FIG. 3 showing the container handling mechanism in a lowered configuration.

### DETAILED DESCRIPTION OF THE INVENTION

The present invention will now be described more fully hereinafter with reference to the accompanying drawings in which exemplary embodiments of the invention are shown. However, the invention may be embodied in other forms and should not be construed as limited to the representative embodiments set forth herein. The exemplary embodiments are provided so that this disclosure will be both thorough and complete, and will fully convey the scope of the invention and enable one of ordinary skill in the art to make, use and practice the invention. Like reference numbers refer to like elements throughout the drawings.

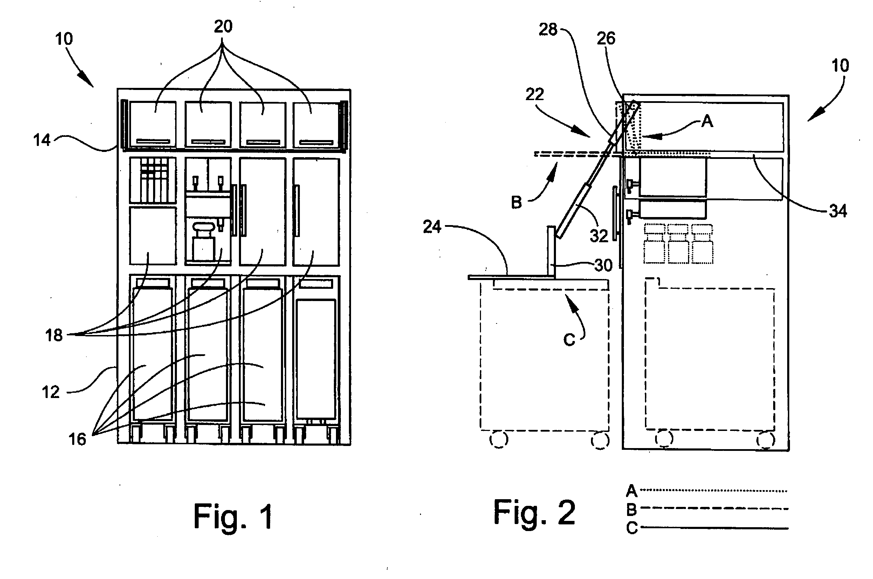

Referring now to Fig. 1, an exemplary galley unit of the type that may be found within the interior of an aircraft is shown generally at reference number **10.** The galley unit 10 is preferably a modular unit made up of a plurality of modules and customizable. The galley unit defines a lower storage area **12** and an upper storage area **14.** Larger and heavier items are typically stored within the lower storage area **12.** Examples of these types of items include conventional wheeled galley carts **16** and other containers that include attached wheels for rolling the carts up and down the aisles during the food and beverage service. As shown, the lower storage area **12** is sized and shaped to accommodate a number of wheeled carts **16.** Other items and containers without attached wheels, and typically smaller in size than wheeled carts, are stored within the upper storage area **14** above the galley carts, and oftentimes are stored overhead. Examples of these types of items include containers, serving items and food and beverages. Items that are repeatedly used and are not typically removed from the galley unit are stored at a comfortable working level within compartments **18.** Examples of these types of items include appliances such as coffee makers and microwave ovens for food and beverage preparation. The uppermost portion of the galley unit defines compartments **20** for storing other galley containers and items, referred to generically herein as "containers." Compartments may have any size and shape and may or may not include doors. The galley unit **10** may further include drawers, electronics, plumbing and other utilities. As shown, the galley unit **10** includes drawers, open compartments, and compartments having doors. Compartments and drawers may be positioned at any level from the floor to several feet or more above floor level, such as overhead.

Referring to Fig. 2, a container handling mechanism, referred to generally at **22,** is shown attached to the galley unit of Fig. 1. The container handling mechanism **22** includes at least a container lifting deck **24,** also referred to herein as a "work deck" or "support deck," that is supported by a pair of supporting lift arms **26,** also referred to herein as "lift arms." The deck **24** defines a surface for supporting at least one container and also functions as a working surface. Each supporting arm is a compound unit that includes a first, upper member **28** and a second, lower member **30** interconnected by a lift cylinder **32,** such as a gas strut. The upper and lower members and lift cylinder are preferably pivotably connected to allow pivotal movement between members. The upper member **28** is also pivotably attached to the galley unit **10** or other rigid supporting structure, such as the vehicle ceiling. The lower member **30** is pivotably attached to the lift cylinder **32** and the deck. The deck **24** may include one member or multiple members that are hinged together to allow the deck to fold for stowing and expand for use. The deck **24** may optionally slidingly engage the lower member **30.**

The container handling mechanism **22** is selectively movable between a fully "raised," "retracted," or "closed" configuration and a fully "lowered," "extended," or "open" configuration. In a first, closed configuration shown at **"A"** in Fig. 2, the deck **24** is stored within a slot **34** defined by the galley unit **10** until needed, and the lower member **30** folds into position to cover a portion of the front of the galley unit **10.** The lower member may be used to cover open compartments and maintain items therein during flight, and functions similar to a compartment door. The supporting arms of the mechanism are folded to a compact position. In a second, intermediate configuration shown at **"B"** in Fig. 2, the deck **24** is pulled from the slot **24** into position elevated from the vehicle floor, such as overhead. The supporting arms are maintained in a folded and compact position. The deck is used to support items removed from the compartments. In a third, lowered configuration shown at **"C"** in Fig. 2, the deck is lowered and the supporting arms are unfolded and extended. The lift cylinder is relaxed and extended to move the deck to its lowest position. The deck may be maintained at a generally horizontal position or at any desired angle at any level between its fully raised and lowered configurations. The deck may be maintained horizontal to perform tasks on the deck and prevent items from sliding off. The deck is preferably maintained at a comfortable working level for each user. As shown in Fig. 2, the deck may also be supported in a lowered configuration by a conventional beverage cart for additional support.

In use, to load a container into the galley unit, the container handling mechanism is unfolded and extended to its lowered position. Containers to be stored are then placed upon the deck. The deck is then raised with assistance from the supporting arms to a position at least as elevated as the bottom of the compartment where the container will be placed. Once the deck is in position, the container is slid from the deck into its respective compartment. The handling mechanism may then be lowered to raise additional containers or may be folded and stored for later use. To lower a container that is stored, the mechanism is unfolded and the deck slid to provide a supporting shelf. The container is then slid from its compartment onto the shelf, and then lowered with assistance from the mechanism.

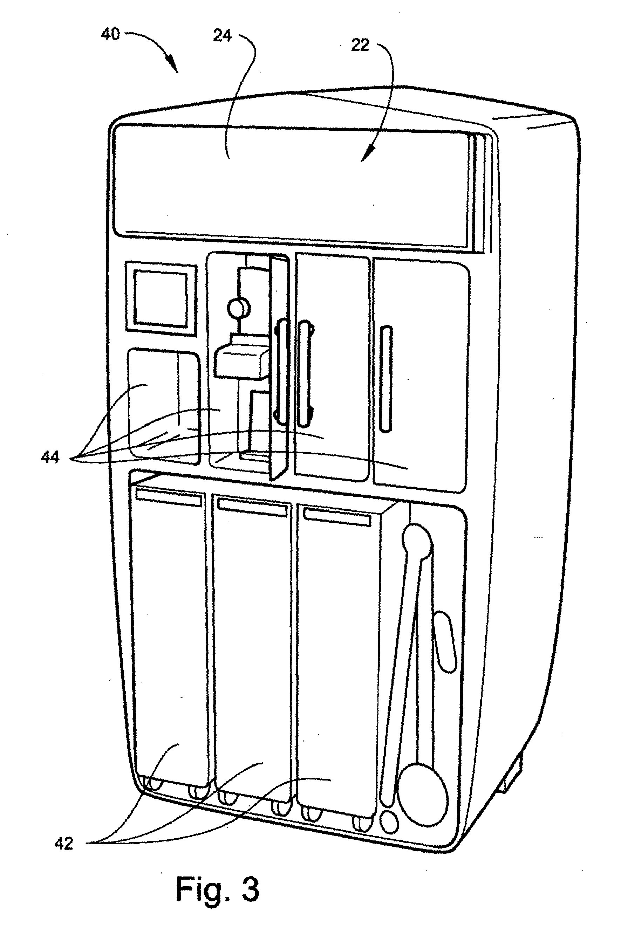

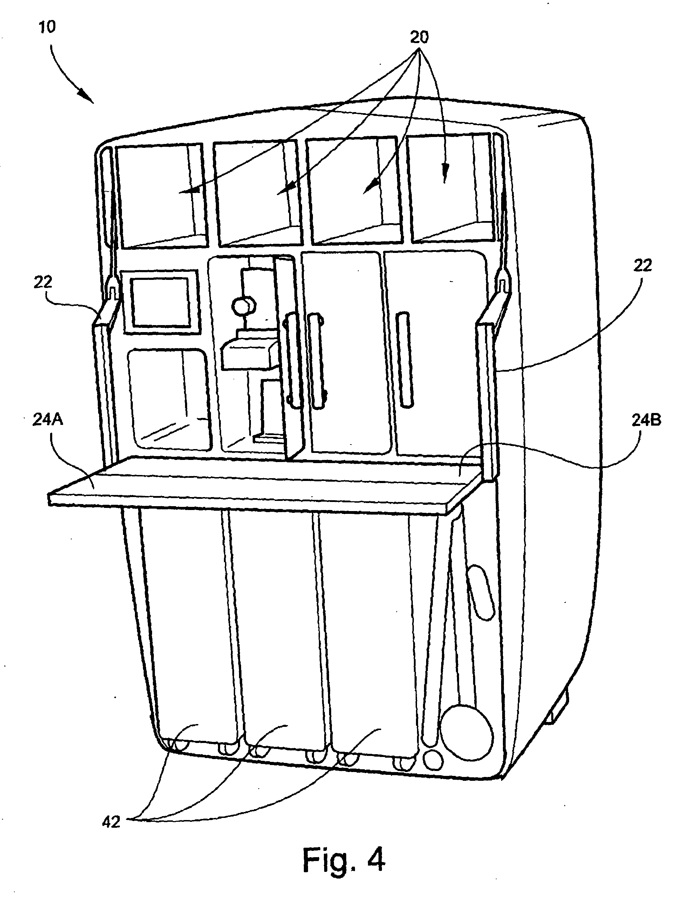

Referring to Figs. 3 and 4, perspective views of another galley unit **40** including an integrated container handling mechanism **22** are shown. The galley unit includes conventional food and beverage carts **42** stored within a lower storage area of the unit and upper compartments **44** within an upper area of the unit. The unit does not define a slot for receiving the deck of the handling mechanism, but instead includes a folding deck. Referring to Fig. 3, the deck **24** is shown folded and covering a plurality of storage compartments **(20** at Fig. 4). Referring to Fig. 4, the deck is shown lowered and uncovering the storage compartments **20.** The container handling mechanism includes a compound deck including first deck member **24A** hinged to second deck member **24B.** The deck is supported by compound supporting arms **22** that preferably include lift cylinders. The supporting arms **22** are shown capable of being stored within the galley unit when in the raised and folded position. Thus, the container handling mechanism is multi-functional in that the aesthetic "door" of the galley unit first folds to the horizontal position, enabling containers to be slid from the upper compartments. The door then translates to a word deck at an ergonomic height providing a working surface.

At least the up and down motion of the work deck **24** is assisted by a lifting system incorporated with the lift arms. In the illustrated examples, the system is passive, and the lift cylinders are gas struts, spring- or pressure-biased gas, hydraulic, or pneumatic cylinders, such as those sold under the trade name HYDROLOK. The lift cylinders are sized to counterbalance the weight of the deck with loaded containers. In this case, the deck effectively has a "neutral buoyancy" and may be moved up and down in a controlled manner using minimal manual force. Alternatively, a full power system employing electrical, hydraulic, or mechanical actuators may be used to move the deck. Means may be provided for latching or locking the deck in any of its positions.

The deck **24** is different from the deck shown in Figs. 1-2 in that it pivots rather than slides. The deck is folded into a vertical position in which it forms a door or cover for the storage spaces. It may be pivoted downward so it extends forward, creating a high-level work surface. The work deck may be moved to a lowered position in a manner similar to the work deck shown in Figs. 1-2, to form a lower-level work surface. Hinged panels **24A** and **24B** may be unfolded to maximize the working surface or folded together to form the door described above.

A galley unit including a container handling mechanism is described above in detail. Various details of the invention may be changed without departing from its scope.

## Claims

1. A galley unit for storing at least one container therein, comprising:
(a) a deck defining a surface for supporting the at least one container; and
(b) at least one support arm including a first member and a second member interconnected by a lift cylinder, wherein the first member is attached to the galley unit and the second member is attached to the deck;
wherein the deck is selectively movable between a fully lowered and a fully raised position.

2. The galley unit according to claim 1, wherein the first member and the second member are pivotably attached to the lift cylinder to permit the at least one support arm to fold to a compact configuration and extend to an extended configuration.

3. The galley unit according to claim 1, further comprising a slot defined by the galley unit for receiving at least a portion of the deck when the deck is in the fully raised position.

4. The galley unit according to claim 1, wherein the deck comprises a single member.

5. The galley unit according to claim 1, wherein the deck comprises two or more members that are hinged together to permit folding.

6. The galley unit according to claim 1, wherein the lift cylinder is selected from the group consisting of a gas strut, a gas cylinder, a hydraulic cylinder and a pneumatic cylinder.

7. The galley unit according to claim 1, wherein the deck has neutral buoyancy and may be raised and lowered using only a relatively small amount of manual force.

8. The galley unit according to claim 1, wherein the deck forms a generally horizontal working surface when in the fully lowered position.

9. The galley unit according to claim 1, wherein the deck is folded and covers at least one galley compartment when the deck is in the fully raised position.

10. The galley unit according to claim 1, further comprising two support arms.

11. A method for storing a galley container within a galley unit of a passenger vehicle comprising a deck defining a surface for supporting the container and a pair of support arms including a first member and a second member interconnected by a lift cylinder, wherein the first member is attached to the galley unit and the second member is attached to the deck, and wherein the deck is selectively movable between a fully lowered and a fully raised position, the method comprising:
positioning the deck in a lowered position elevated from a floor of the passenger vehicle;
positioning and supporting the galley container on the deck;
raising the deck to a raised position; and
sliding the galley container within a compartment of the galley unit.

## Patentansprüche

1. Bordkücheneinheit zum Aufbewahren mindestens eines Behälters darin, umfassend:
(a) eine Plattform, die eine Oberfläche definiert, um den mindestens einen Behälter zu tragen; und
(b) mindestens einen Tragarm, welcher ein erstes Bauteil und ein zweites Bauteil beinhaltet, die durch einen Hubzylinder miteinander verbunden sind, wobei das erste Bauteil an der Bordkücheneinheit angebracht ist und das zweite Bauteil an der Plattform angebracht ist;
wobei die Plattform zwischen einer vollständig abgesenkten und einer vollständig angehobenen Position selektiv bewegbar ist.

2. Bordkücheneinheit nach Anspruch 1, wobei das erste Bauteil und das zweite Bauteil schwenkbar an dem Hubzylinder angebracht sind, um es dem wenigstens einen Tragarm zu erlauben, sich zu einer kompakten Anordnung zu falten und sich zu einer ausgestreckten Anordnung auszustrecken.

3. Bordkücheneinheit nach Anspruch 1, weiterhin umfassend eine durch die Bordkücheneinheit definierte Aussparung, um wenigstens einen Teil der Plattform aufzunehmen, wenn sich die Plattform in der vollständig angehobenen Position befindet.

4. Bordkücheneinheit nach Anspruch 1, wobei die Plattform ein einzelnes Bauteil umfasst.

5. Bordkücheneinheit nach Anspruch 1, wobei die Plattform zwei oder mehr Bauteile umfasst, die gelenkartig verbunden sind, um Zusammenklappen zu erlauben.

6. Bordkücheneinheit nach Anspruch 1, wobei der Hubzylinder ausgewählt ist aus der Gruppe, bestehend aus einer Gasdruckfeder, einem Gaszylinder, einem hydraulischen Zylinder und einem pneumatischen Zylinder.

7. Bordkücheneinheit nach Anspruch 1, wobei die Plattform eine neutrale Spannkraft aufweist und unter Verwendung eines nur relativ kleinen Ausmaßes an manueller Kraft angehoben und abgesenkt werden kann.

8. Bordkücheneinheit nach Anspruch 1, wobei die Plattform eine allgemein horizontale Arbeitsoberfläche ausbildet, wenn sie sich in der vollständig abgesenkten Position befindet.

9. Bordkücheneinheit nach Anspruch 1, wobei die Plattform umgeklappt wird und wenigstens ein Kompartiment der Bordküche abdeckt, wenn sich die Plattform in der vollständig angehobenen Position befindet.

10. Bordkücheneinheit nach Anspruch 1, die überdies zwei Tragarme umfasst.

11. Verfahren zum Einlagern eines Bordküchenbehälters in einer Bordkücheneinheit eines Passagierfahrzeugs, die folgendes umfasst: eine Plattform, die eine Oberfläche zum Tragen des Behälters definiert, und ein Paar von Tragarmen, die ein erstes Bauteil und ein zweites Bauteil beinhalten, die durch einen Hubzylinder miteinander verbunden sind, wobei das erste Bauteil an der Bordkücheneinheit angebracht ist und das zweite Bauteil an der Plattform angebracht ist, und wobei die Plattform zwischen einer vollständig abgesenkten und einer vollständig angehobenen Position selektiv bewegbar ist, wobei das Verfahren umfasst:
Positionieren der Plattform in einer abgesenkten Position, die gegenüber einem Boden des Passagierfahrzeugs erhöht ist;
Positionieren und Tragen des Bordküchenbehälters auf der Plattform;
Anheben der Plattform zu einer angehobenen Position; und
Gleiten des Bordküchenbehälters in einem Kompartiment der Bordkücheneinheit.

## Revendications

1. Bloc-office de bord destiné au stockage d'au moins un conteneur, comprenant :
(a) une plateforme définissant une surface pour le support dudit au moins un conteneur ; et
(b) au moins un bras de support comportant un premier élément et un deuxième élément interconnectés par un vérin de levage, le premier élément étant fixé au bloc-office et le deuxième élément étant fixé à la plateforme ;
dans lequel la plateforme est mobile de manière sélective entre une position totalement abaissée et une position totalement relevée.

2. Bloc-office selon la revendication 1, dans lequel le premier élément et le deuxième élément sont montés pivotants sur le vérin de levage afin de permettre audit au moins un bras de support de se replier dans une configuration compacte et de se déployer dans une configuration déployée.

3. Bloc-office selon la revendication 1, comprenant de plus une encoche définie par le bloc-office pour recevoir au moins une partie de la plateforme lorsque la plateforme est dans la position totalement relevée.

4. Bloc-office selon la revendication 1, dans lequel la plateforme comprend un élément unique.

5. Bloc-office selon la revendication 1, dans lequel la plateforme comprend deux éléments ou plus qui sont articulés entre eux pour en permettre le repliage.

6. Bloc-office selon la revendication 1, dans lequel le vérin de levage est choisi dans le groupe constitué d'un amortisseur à gaz, d'un vérin à gaz, d'un vérin hydraulique et d'un vérin pneumatique.

7. Bloc-office selon la revendication 1, dans lequel la plateforme possède une flottabilité neutre et peut être élevée et abaissée en utilisant simplement une force manuelle relativement faible.

8. Bloc-office selon la revendication 1, dans lequel la plateforme forme une surface de travail globalement plane lorsqu'elle est dans la position totalement abaissée.

9. Bloc-office selon la revendication 1, dans lequel la plateforme est repliée et recouvre au moins un compartiment du bloc lorsque la plateforme est dans la position totalement relevée.

10. Bloc-office selon la revendication 1, comprenant en plus deux bras de support.

11. Procédé de stockage d'un conteneur de bloc-office à l'intérieur d'un bloc-office d'un véhicule pour passagers, comprenant une plateforme définissant une surface pour le support du conteneur, et une paire de bras de support comprenant un premier élément et un deuxième élément interconnectés par un vérin de levage, le premier élément étant fixé au bloc-office et le deuxième élément étant fixé à ladite plateforme, et dans lequel la plateforme est mobile de manière sélective entre une position totalement abaissée et une position totalement relevée, le procédé comprenant :
la mise en place de la plateforme dans une position abaissée surélevée du plancher du véhicule pour passagers ;
la mise en place et le support du conteneur du bloc-office sur la plateforme ;
le relevage de la plateforme jusqu'à une position relevée ; et
l'introduction par glissement du conteneur du bloc-office dans un compartiment du bloc-office.
